# EUROPEAN PATENT SPECIFICATION

(11) **EP 1 629 271 B1**
(45) Date of publication and mention of the grant of the patent: **06.03.2013**
(21) Application number: 04734775.2
(22) Date of filing: 25.05.2004
(51) Int. Cl.: G01N 27/447

(54) **Electrophoretic support with hydrogel and its use**
Elektrophoreseträger mit Hydrogel und dessen Verwendung
Support electrophoretique avec hydrogel et son utilisation

(30) Priority: 28.05.2003 SE 0301592
(43) Date of publication of application: 01.03.2006
(73) Proprietor: GE Healthcare Bio-Sciences AB, 751 84 Uppsala (SE)
(72) Inventor: LARSSON, Anders, S-751 84 Uppsala (SE); PALMGREN, Ronnie, S-751 84 Uppsala (SE); SÖDERBERG, Sofia, 113 39 Stockholm (SE)
(74) Representative: Aldenbäck, Ulla Christina
(86) International application number: PCT/SE2004/000803
(87) International publication number: WO 2004/106911

(56) References cited:
- WO-A2-02/08744
- US-A- 4 415 428
- US-A- 5 112 736
- US-A- 2002 053 399
- US-A- 2002 056 639

## Description

### Field of the invention

The present invention relates to electrophoresis and in particular low fluorescent electrophoretic supports for hydrogels used for separation of fluorescence labelled biomolecules. More particularly, the invention relates to use of specific polymer films for this purpose.

### Background

Electrophoresis has been used for a long time to separate charged molecules according to their difference in migration rate under the influence of an electrical field.

Traditionally, the molecules are stained in the gel after electrophoresis by more or less selective dye stains or by precipitation of colloidal metal particles.
The molecules to be separated may also be labelled with, for example a radioactive or fluorescent label, for detection after the electrophoresis.
Today it is most common to avoid the use of radioactivity in favour of fluorescent labelling. However, the electrophoretic backings used to carry the electrophoretic slab gel are in many cases fluorescent per se which disturbs the detection procedure.

Commonly used electrophoretic support films, such as polyethylene terephtalate (PET) function satisfactorily for relatively large amounts of fluorescence labelled biomolecules but disturb and hinder the detection of low amounts of biomolecules after slab gel electrophoresis.
Since this can lead to false negative results in for example a diagnostic assay it is very important to be able to detect very low amounts of biomolecules in for example a biological sample. Another case is in pharma research where most of the pharmacologically interesting proteins occur at very low concentrations compared to high abundance proteins, such as albumin.

To solve this problem, electrophoretic supports of glass have been used. Glass enables imaging of low amounts of fluorescence labelled samples. However, glass as electrophoretic support is not desirable of space, weight and safety reasons. Furthermore, electrophoretic glass supports are not suitable for production of large amounts of preswollen ready to use gels. It would be desirable to have pre-swollen ready to use gels which are non-fragile, enable fluorescence detection of low sample amounts and occupy a minimum of space.

Thus, the problem with fluorescent background in detection of fluorescence labelled biomolecules following slab gel electrophoresis still needs to be solved.

### Prior art

US 4 415 428 describes a support for an electrophoretic medium comprising a plastic film of for example polypropylene. This support film is not intended for fluorescence detection of biomolecules and is not adapted for such detection.

WO 9823950 describes supported polyacrylamide gels for electrophoresis. The support is preferably non-interfering with respect to detection of a fluorescent label. It is stated that a glass support is suitable for this purpose since glass, unlike plastic is devoid of spectral activity that impairs of prevents fluorescence imaging.

US 2002/0056639A1 describes methods and devices for conducting capillary electrophoresis. The capillary electrophoresis is performed in microchannels having a norbornene based polymer surface in order to avoid electroosmotic flow. In capillary electrophoresis, attachment to the capillary surface is not needed.

### Summary of the invention

One object of the present invention was to provide a low fluorescent electrophoretic slab gel support giving no or very little background fluorescence.

Another object was to avoid using glass for this purpose since glass is fragile, heavy and has many production economic drawbacks.

A further object was to provide a ready-to-use composite comprising a low fluorescent electrophoretic slab gel support and a hydrogel.

In a first aspect the present invention relates to use of oriented polypropylene (BOPP) or polychlorotrifluoroethylene (PCTFE) as a low fluorescent support film of an electrophoresis hydrogel for slab gel electrophoresis

In case polypropylene is used it must be oriented so that the optical clarity is high enough to avoid any light scattering effects (haze) during fluorescence detection. Orientation (preferably biaxial) also increases the rigidity of the film and improves the oxygen barrier properties. The degree of orientation can be measured e.g. by birefringence, dichroism, vibrational spectroscopy or X-ray scattering.

A preferred use is for the second dimension of 2D electrophoresis and preferably the hydrogel is a pre-swollen hydrogel ready to use.

According to the invention, the plastic film is made from one of the polymers above, preferably BOPP.
The film is transparent and has a haze value lower than 3 %. The film has a suitable flexibility, i.e. a flexural modulus of 1300- 2500 MPa.

The film is coated with a barrier (non-fluorescent) layer, which gives the resulting laminate very low oxygen permeability. This eliminates inhibition of the acrylamide polymerisation due to oxygen diffusion from the film into the monomer solution.

Preferably the barrier layer is also gel adherent.
Preferred is allylglycidylagarose which has good barrier and gel adherent properties.

Alternatively, separate barrier and adherent layers are used, for example a glass coating acting as an oxygen barrier and a silane coating acting as a gel adherent layer.

Preferably, the laminate has carbon-carbon double bonds on the barrier layer surface, either intrinsically present in the barrier layer material or resulting from a chemical reaction on the layer surface, enabling direct gel adhesion.

Particularly good barrier properties towards oxygen are obtained from films of polymers such as polyvinylidene dichloride, acrylonitrile copolymers, aromatic polyamides, polyethylene naphtalenate and ethylene-vinyl-alcohol copolymers. Also, dense ultrathin films of inorganic materials such as metals, metal oxides and diamond-like carbon can have very good oxygen barrier properties.

A hydrogel (e.g. a polyacrylamide gel) is polymerised onto the surface, with good adhesion to the barrier/adherent layer surface. The hydrogel may also be an agarose gel or a derivatized acrylamide gel.

In a second aspect, the invention relates to a composite of polymer film as described above a hydrogel.

Preferably, the composite comprises a support polymer film of biaxially oriented polypropylene (BOPP), a barrier/adherent layer of allylglycidylagarose and a hydrogel of polyacrylamide.

For easy handling, the BOPP film is preferably >85 µm thick, such as 90 µm thick.
In a third aspect, the invention relates to a kit for 2D electrophoresis comprising a composite as described above for the second dimension and Immobilibe Dry strip™ for the first dimension. For running of the second dimension, the Immobiline Dry strip is sealed to the composite by an appropriate sealant.

Preferably, the hydrogel is pre-swollen and the kit further comprising N-piperidino (or N-pyrrolidino) propionamide (PPA) buffer which keeps the gel storage stable in its swollen state.

The invention also relates to composites of polymer film laminated with two layers (one oxygen barrier layer and one gel adherent layer) and hydrogel.

The film-hydrogel composite is used for electrophoretic separation of biomolecules (particularly proteins, peptides and nucleotides) with subsequent fluorescence detection.

### Detailed description of the invention

### EXPERIMENTAL PART

### 1. Synthesis of barrier/gel adherent material (Allylglycidylagarose):

Agarose (10 grams) is dissolved in 490 ml of boiling water. The solution is maintained at 80°C. 1.67 g sodium borohydride was added to 10 ml of 14 M sodium hydroxide and then added to the agarose solution under constant stirring. After ten minutes, 100 ml of a 10 % sodium hydroxide solution is added, followed by drop-wise addition of 25 ml of allylglycidyl ether over a 15-minute period. After one hour, an additional 25 ml of allylglycidyl ether is added as before and reacted for another hour. The reaction mixture is cooled to 60°C and then neutralized by the addition of 4 M acetic acid.

The solution is slowly added to three volumes of acetone while stirring, yielding a white precipitate. The solvent was decanted and the precipitate was dissolved in water and the solution was again precipitated in acetone. This procedure was repeated five times and the final precipitate was recovered by filtering through filter paper. The product was oven dried at 60°C and ground to a powder.

### 2a. Coating a barrier/gel adherent layer on plastic film:

The coating was made on biaxially oriented polypropylene (OPP C58, UCB Films) (both with and without glass coating), PET, and Aclar 11C (i.e. PCTFE Honeywell).

Sheets of the plastics mentioned above was plasma treated in a Plasma Electronic PICCOLO RF-powered reactor under the following conditions: RF power 240 Watts, Oxygen flow 180 sccm, for three minutes. Subsequent to the plasma treatment the film was coated with a 1-% aqueous solution of allylglycidylagarose. The coating was prepared to a wet thickness of 36 µm using a spiral-wound rod applicator.

Keeping the film in an oven of temperature 100°C for 20 minutes then evaporates the water. After the heat treatment of the coating it is put in a freezer to force a gelation of the allylglycidylagarose coating.

### 2b. Glass coating by plasma reaction

The coating process was made as a factorial experiment, with the four parameters: flow of tetramethyldisiloxane (TMDSO), flow of oxygen, and time varied from low to high were evaluated.

The flow of TMDSO were in the range 15 to 20 sccm, the flow of oxygen from 18 to 26 sccm, the power from 250 to 300 W and the time from 10 to 30 seconds.

### Plasma treatment

To increase the hydrophilicity of the surface the films were treated in a plasma reactor with flow of oxygen to achieve active hydroxy-sites for the silanization.

The plastic films were plasma treated in a Plasma Electronic PICCOLO RF-powered reactor under the following conditions: RF power 240 Watts, Oxygen flow 180 sccm, for three minutes.

### Contact angle measurements

After plasma treatment the water contact angles were measured to make sure the surface was as hydrophilic as desired, as an indication of the cleanness of the surface. The measurements were made on a Ramé-Hart manual contact angle goniometer.

The measurements of the angles were performed by applying three drops on the treated side of each film and determine the angles on both the right and the left side of the drop and calculate a mean value for the surface.

### Silanization

A silane solution was prepared by mixing ethanol (32 ml), acetic acid (4.8 ml) and Bind Silane (γ-methacryloxypropyltrimethoxysilane, Amersham Biosciences) (240 µl) in a beaker. The silane solution was left for stirring for approximately five minutes before use.

The pre-plasma treated glass coated plastic films were treated with the silane solution, by adding Bind Silane solution to the glass coated surface, approximately 1 ml per sheet, and wiping it all over the surface with Kleenex tissue. The surface was left to evaporate the excess ethanol for about 20 minutes and finally the surface was polished with an ethanol moistened Kleenex tissue to remove excess Bind Silane that has not bound covalently to the surface.

After silanization the contact angles of the film were measured to identify whether the surfaces have been successfully modified from the former hydrophilic surface to a more hydrophobic one.

### 3. Casting of Polyacrylamide Gel for Adhesion Tests

The casting apparatus consists of glass plates (8,5x8,5 cm). The coated plastic was placed on top of the glass plate with the hydrophilic side containing the allylglycidylagarose film facing outwards. A U-shaped 1-mm thick spacer was placed between the glass supported allylglycidylagarose coated plastic and another glass plate. This cassette was held in place by four clamps, and placed in a vertical position.

Solutions of ammonium persulfate (APS) and tetramethyl ethylenediamine (Temed) were prepared prior to use by dissolving 1.0 g APS in 100 ml distilled water and 750 µl of Temed in 100 ml distilled water.

Just prior to casting 90 ml of acrylamide solution were mixed with 5 ml each of the APS and Temed solutions.

The casting solution was injected to the vertical casting cassette from the top via a syringe. On top of the casting solution were a few drops of isopropanol added to prevent oxygen inhibition of the polymerization.

### Adhesion tests

### Spatula test

The spatula test was the first test to evaluate the adhesion of the gel to the backing. The test was performed by scratch the gel with a spatula and visually judge whether the gel has adhered to the surface. If the adhesion looked good the film passed the test and went further to the vacuum test.

### Vacuum test

In the vacuum test the gel's adhesion to the backing was evaluated by using vacuum equipment to evaluate the backing by suction. The suction nozzle was placed on the backing by penetrating the gel with the nozzle and let the pressure go down to 20-30 mbar and then the nozzle was carefully removed by pulling straight out from the surface.

Five points per gel were investigated in the above-mentioned way. The results were put into a graduated scale from 0 to 5 where 0 is the worst scenario when none of the gel plugs adhere to the surface and 5 when the adhesion is very good (all 5 of the gel plugs are firmly attached to the surface).

### Results from adhesion tests

### Silanized surface

The silanized glass coated OPP from UCB Films showed good adhesion, a mean value of 4 points out of 5 were firmly attached to the surface.

### Allylglycidyl agarose coated surface

The allylglycidyl coatings on non-glass coated OPP, Aclar and Zeonor, respectively, all showed good adhesion results from the vacuum test compared to GelBond PAG (PET based backing film from Cambrex) which was used as a reference.

### 4. Polyacrylamide Gel Electrophoresis on Allylglycidylagarose coated film

The coated films according to the invention are especially suited for the second dimension of 2D electrophoresis. In this example, the first dimension, i.e. isoelectric focusing, is run on Immobiline Dry Strips™.

For the second dimension, the strips were equilibrated with dithiotreitol (DTT), applied on top of the gel, and sealed with sealing solution. Proteins were allowed to enter the gel with constant power (2.5W/gel) for 15-30 minutes and the separation was then run with 17 W/gel (max 200 W) until the dye front reached the bottom of the gel. Temperature was set to 25 °C.

In gels according to the invention (see Table 1), 50 µl Cy5™ labelled mouse liver protein was used and the gels were scanned in a Typhoon 9400 at 200 microns resolution, pmt 500 V at Cy5 wavelengths and normal sensitivity.

In conventional GelBond gels, 200µl of the same sample had to be used.

The results show that the gels according to the invention show better electrophoresis maps than the conventional gels. Fluorescence, haze and flexural modulus values are shown in Table 1.

**Table 1**

| **Material** | **Fluorescence** | **Haze** | **Flexural modulus** | **Comments** |
|---|---|---|---|---|
| | **[cps]** | **[%]** | **[MPa]** | |
| PET | 100000 | 2-10 | 1000 | Conventional film |
| | | | | |
| BOPP | 7500 | 3 | ∼1500 | |
| | | | | |
| Aclar | 5000-7000 | < 1 | 1300-1500 | |
| | | | | |
| Zeonor | 4500 | < 1 | 2200 | |
| | | | | |

## Claims

1. Use of biaxially oriented polypropylene (BOPP) or polychlorotrifluoroethylene (PCTFE) as a low fluorescent support film of an electrophoretic hydrogel for slab gel electrophoresis.

2. Use according to claim 1, wherein the hydrogel is agarose, acrylamide or a derivatized acrylamide.

3. Use according to claims 1 or 2 for the second dimension of 2D electrophoresis.

4. Use according to one or more of the above claims, wherein the support film is provided or laminated with an upper layer (provided between the film and the hydrogel) of a material functioning as an oxygen barrier as well as a gel adhesive.

5. Use according to claim 4, wherein the material is allylglycidyl agarose.

6. Use according to one or more of the claims 1-5, wherein the support is provided or laminated with two layers between the film and the hydrogel of which one is an oxygen barrier material and the other is a gel adherent material.

7. Use according to claim 6, wherein the two layers are made of glass and silane, respectively.

8. Use according to one or more of the above claim 5, wherein the polymer is biaxially oriented polypropylene, the upper layer is allyldglycidyl agarose and the hydrogel is acrylamide.

9. A composite of support polymer film as used according to any of the above claims 1-8 and a hydrogel.

10. A composite according to claim 9, comprising a support polymer film of biaxially oriented polypropylene (BOPP), a barrier/adherent layer of allylglycidylagarose and a hydrogel of polyacrylamide.

11. A composite according to claim 10, wherein the BOPP film is >85 *µ*m thick.

12. A kit for 2D electrophoresis comprising a composite according to claim 10 or 11 for the second dimension and Immobilibe Dry strip™ for the first dimension.

13. A kit according to claim 12, wherein the hydrogel is preswollen and the kit further comprising PPA buffer.

## Patentansprüche

1. Verwendung von biaxial verstrecktem Polypropylen (BOPP) oder Polychlortrifluorethylen (PCTFE) als wenig fluoreszierende Trägerfolie eines elektrophoretischen Hydrogels für Plattengelelektrophorese.

2. Verwendung nach Anspruch 1, wobei das Hydrogel Agarose, Acrylamid oder ein derivatisiertes Acrylamid ist.

3. Verwendung nach Anspruch 1 oder 2 für die zweite Dimension von 2D-Elektrophorese.

4. Verwendung nach einem oder mehreren der vorstehenden Ansprüche, wobei die Trägerfolie ausgestattet oder laminiert ist mit einer (zwischen der Folie und dem Hydrogel vorgesehenen) oberen Schicht aus einem Material, das als Sauerstoffbarriere sowie als Geladhäsionsmittel fungiert.

5. Verwendung nach Anspruch 4, wobei das Material Allylglycidylagarose ist.

6. Verwendung nach einem oder mehreren der Ansprüche 1 - 5, wobei der Träger mit zwei Schichten zwischen der Folie und dem Hydrogel ausgestattet oder laminiert ist, von denen die eine in einem Sauerstoffbarrierematerial und die andere in einem geladhärenten Material besteht.

7. Verwendung nach Anspruch 6, wobei die beiden Schichten aus Glas beziehungsweise Silan gemacht sind.

8. Verwendung nach einem oder mehreren der vorstehenden Ansprüche, wobei das Polymer biaxial verstrecktes Polypropylen, die obere Schicht Allylglycidylagarose und das Hydrogel Acrylamid ist.

9. Verbund aus Trägerpolymerfolie, wie nach einem der vorstehenden Ansprüche 1 - 8 verwendet, und einem Hydrogel.

10. Verbund nach Anspruch 9, der eine Trägerpolymerfolie aus biaxial verstrecktem Polypropylen (BOPP), eine Barriere-/adhärente Schicht aus Allylglycidylagarose und ein Hydrogel aus Polyacrylamid umfasst.

11. Verbund nach Anspruch 10, wobei die BOPP-Folie > 85 µm dick ist.

12. Kit für 2D-Elektrophorese, der einen Verbund nach Anspruch 10 oder 11 für die zweite Dimension und Immobiline Dry Strip™ für die erste Dimension umfasst.

13. Kit nach Anspruch 12, wobei das Hydrogel vorgequollen ist und der Kit weiterhin PPA-Puffer umfasst.

## Revendications

1. Utilisation d'un polypropylène (BOPP) ou polychlorotrifluoroéthylène (PCTFE) orienté bi-axialement en tant que film support à faible fluorescence d'un hydrogel d'électrophorèse afin d'assurer une électrophorèse en gel sur plaque.

2. Utilisation selon la revendication 1, dans laquelle l'hydrogel est de l'agarose, l'acrylamide ou un dérivé d'acrylamide.

3. Utilisation selon les revendications 1 ou 2, afin d'assurer la deuxième dimension d'une électrophorèse en 2D.

4. Utilisation selon l'une ou plusieurs des revendications précédentes, dans laquelle le film de support comporte ou est formé d'une ou plusieurs couches avec une couche supérieure (agencée entre le film et l'hydrogel) d'un matériau formant de barrière à l'oxygène ainsi que d'un gel adhésif.

5. Utilisation selon la revendication 4, dans laquelle le matériau est de l'allylglycidylagarose.

6. Utilisation selon l'une ou plusieurs des revendications 1 à 5, dans laquelle le support comporte ou est formé de deux couches entre le film et l'hydrogel dont une est un matériau formant barrière à l'oxygène et l'autre est un matériau à base de gel adhésif.

7. Utilisation selon la revendication 6, dans laquelle les deux couches sont respectivement à base de verre et de silane.

8. Utilisation selon l'une ou plusieurs des revendications précédentes, dans laquelle le polymère est du polypropylène à orientation bi-axiale, la couche supérieure est à base d'allylglycidylagarose et l'hydrogel est de l'acrylamide.

9. Composite de film polymère de support tel qu'utilisé selon l'une quelconque des revendications 1 à 8 précédentes et d'un hydrogel.

10. Composite selon la revendication 9, comprenant un film polymère de support de polypropylène bi-axialement orienté (BOPP), une couche de barrière/adhésive d'allylglycidylagarose et un hydrogel de polyacrylamide.

11. Composite selon la revendication 10, dans lequel le film de BOPP présente une épaisseur supérieure à 85 µm.

12. Kit d'électrophorèse en 2D comprenant un composite selon la revendication 10 ou 11 afin d'assurer la seconde dimension et une bande à sec d'Immobiline™ afin d'assurer la première dimension.

13. Kit selon la revendication 12, dans lequel l'hydrogel est préalablement gonflé et le kit comprend, en outre, un tampon de PPA.
